# EUROPEAN PATENT SPECIFICATION

(11) **EP 4 354 556 B1**
(45) Date of publication and mention of the grant of the patent: **01.04.2026**
(21) Application number: 21967645.9
(22) Date of filing: 15.12.2021
(51) Int. Cl.: H01M 4/70, H01M 50/593, H01M 50/55

(54) **CURRENT-COLLECTING COMPONENT, BATTERY CELL, BATTERY, MANUFACTURING METHOD AND DEVICE FOR THE CURRENT COLLECTING COMPONENT**
STROMSAMMELKOMPONENTE, BATTERIEZELLE, BATTERIE, HERSTELLUNGSVERFAHREN UND VORRICHTUNG FÜR DIE STROMSAMMELKOMPONENTE
COMPOSANT COLLECTEUR DE COURANT, ÉLÉMENT DE BATTERIE, BATTERIE, PROCEDE ET DISPOSITIF DE FABRICATION POUR LE COMPOSANT COLLECTEUR DE COURANT

(43) Date of publication of application: 17.04.2024
(60) Divisional application: 26150218.1
(73) Proprietor: Contemporary Amperex Technology (Hong Kong) Limited, Central, Central And Western District (HK)
(72) Inventor: SU, Huasheng, Ningde City, Fujian 352100 (CN); XING, Chengyou, Ningde City, Fujian 352100 (CN); LI, Quankun, Ningde City, Fujian 352100 (CN); WANG, Peng, Ningde City, Fujian 352100 (CN); YANG, Daowei, Ningde City, Fujian 352100 (CN); JIN, Haizu, Ningde City, Fujian 352100 (CN)
(74) Representative: Ziebig Hengelhaupt Intellectual Property Attorneys Patentanwaltskanzlei PartGmbB
(86) International application number: PCT/CN2021/138562
(87) International publication number: WO 2023/108509

(56) References cited:
- CN-A- 103 620 824
- CN-A- 108 305 982
- CN-A- 108 370 020
- CN-A- 112 542 641
- CN-U- 212 542 629
- CN-U- 213 692 281
- JP-A- 2015 103 318
- JP-A- 2016 115 410
- US-A1- 2013 101 875
- US-A1- 2016 049 634
- US-A1- 2021 359 365

## Description

### TECHNICAL FIELD

This application relates to the field of battery technologies and specifically to a current collecting component, a battery cell, a battery, and an electric device.

### BACKGROUND

With the development of new energy technologies, batteries are increasingly used in various applications, such as smartphones, laptops, electric bicycles, electric cars, electric planes, electric ships, electric toy cars, electric toy boats, electric toy planes, and electric tools.

For battery cells, both their performance and safety need to be considered. If the safety of a battery cell is low, the battery cell is faced with a risk of fire or explosion. Therefore, how to improve the safety of battery cells is an urgent problem to be solved in battery technologies.

CN 112 542 641 A discloses a current collecting component for a battery, with the features of the preamble of independent claim 1.

### SUMMARY

Embodiments of this application provide a current collecting component, a battery cell, a battery, and an electric device, so as to effectively improve the safety of battery cells.

According to a first aspect, an embodiment of this application provides a current collecting component for a battery cell, according to claim 1.

In the above technical solution, two current collectors are connected via an insulator, and the two current collectors are insulated from each other by the insulator. The limiting structure restricts the current collecting component from leaving the insulator in the width direction of the current collecting component, so that the two current collectors are not easily separated from the insulator, reducing the risk of the two current collectors overlapping with each other and causing a short circuit inside the battery cell, thus improving the safety of the battery cell.

In some embodiments, the limiting structure includes a limiting part and a recess, where one of the limiting part and the recess is provided on the current collector, and the other is provided on the insulator; the limiting part is configured to engage with the recess to restrict the current collectors from leaving the insulator in the width direction.

In the above technical solution, the current collectors are restricted from leaving the insulator in the width direction of the current collecting component through engagement of the limiting part and the recess. The structure is simple, easy to manufacture, and can effectively improve the firmness of the connection between the current collector and the insulator after connection.

The insulator is provided with a limiting slot, where one end of the current collector is snap fitted into the limiting slot in the width direction to restrict the current collector from moving relative to the insulator in a thickness direction of the current collecting component.

In the above technical solution, one end of the current collecting component is snap fitted into the limiting slot of the insulator, and the limiting slot limits the movement of the current collecting component, thereby restricting the current collectors from moving relative to the insulator in the thickness direction of the current collecting component, so that the current collectors are not easily separated from the insulator in both the width direction and the thickness direction of the current collecting component.

In some embodiments, the limiting structure includes: a recess provided on the current collector; and a limiting part provided on the insulator, where the limiting part is located at least partially inside the limiting slot and engages with the recess to restrict the current collector from leaving the insulator in the width direction.

In the above technical solution, the limiting part on the insulator is inserted into the recess of the current collector, and one end of the current collecting component is snap fitted into the limiting slot of the insulator, so that the current collector is not easily separated from the insulator in both the width and thickness directions of the current collecting component.

In some embodiments, the recess is a first through hole running through surface of the current collector in the thickness direction.

In the above technical solution, the recess is a through hole structure, which is easy to process. The recess can provide more accommodating space for the limiting part, and the limiting part is not easily detached from the recess due to elastic deformation of the current collector, thereby enhancing the ability of the limiting structure to limit the position of the current collector, further improving the firmness of the connection between the current collector and the insulator.

In some embodiments, the limiting slot includes two slot sidewalls, the two slot sidewalls being arranged opposite each other in the thickness direction with two ends of the limiting part fixed to the two slot sidewalls respectively.

In the above technical solution, the two ends of the limiting part are respectively fixed on the two slot sidewalls of the limiting slot, enhancing the connection strength between the limiting part and the insulator, thereby reducing the risk of the current collector leaving the limiting slot due to breakage of the limiting part from the insulator.

In some embodiments, the recess is depressed along the thickness direction of the current collecting component.

In the above technical solution, the recess is depressed in the thickness direction of the current collecting component, causing the limiting part to extend in the thickness direction of the current collecting component. The limiting part and the recess cooperate to restrict the current collector from leaving the insulator in the width direction of the current collecting component. This structure is simple and reduces the difficulty in molding the recess and the limiting part.

In some embodiments, multiple limiting structures are arranged along the extending direction of the current collecting component between the current collector and the insulator.

In the above technical solution, by providing multiple limiting structures between the current collector and the insulator, the firmness of the connection between the current collector and the insulator can be further improved, making it less likely for the current collector to detach from the insulator.

In some embodiments, the current collecting component includes multiple insulators that are spaced along the extending direction of the current collecting component. The current collector is configured to be able to bend in a gap region between adjacent two of the insulators.

In the above technical solution, multiple insulators are spaced apart along the extending direction of the current collecting component, so that the current collector is more easily bent in the gap region between two adjacent insulators, facilitating the folding of the current collecting component into a folded structure to reduce the space occupied by the current collecting component inside the battery cell.

In some embodiments, the insulator is an injection-molded piece that is molded between two current collectors.

In the above technical solution, the insulator is an injection-molded piece, which has a simple molding process. The insulator molded is adhered to the current collectors, which can improve the firmness of the connection between the current collectors and the insulator.

According to a second aspect, an embodiment of this application provides a battery cell including: an electrode assembly having two tabs with opposite polarities; two output poles having opposite polarities, where the two output holes are configured to output electrical energy of the battery cell; and the current collecting component provided in any embodiment of the first aspect, where one current collector is configured to connect one tab and one output pole and the other current collector is configured to connect the other tab and the other output pole.

In some embodiments, the two tabs are formed at one same end of the electrode assembly.

In the above technical solution, the two tabs are formed on the same side of the electrode assembly, which is convenient for connecting to two current collectors to achieve same-side tabs and reduce the space occupied by the tabs, thereby improving the energy density of the battery cell.

In some embodiments, the current collector includes a welding region for welding to the tab, the welding region has an abutment surface for abutting against the tab, and the insulator does not exceed the abutment surface.

In the above technical solution, the insulator does not exceed the abutment surface between the current collector and the tab being welded, so interference between the insulator and the tab during welding of the current collector to the tab is avoided, preventing the situation where the abutment surface cannot abut against the tab.

In some embodiments, the electrode assembly has a center hole and the insulator has a second through hole, the second through hole being opposite the center hole.

In the above technical solution, the second through hole in the insulator is located opposite the center hole of the electrode assembly, which can achieve accurate installation of the current collecting component.

According to a third aspect, an embodiment of this application provides a battery including: the battery cell provided in any of the embodiments of the second aspect; and a box configured to accommodate the battery cell.

According to a fourth aspect of the invention, an embodiment of this application provides a manufacturing method of a current collecting component according to the first aspect of the invention, including: providing two current collectors; providing an insulator; and connecting the insulator to the two current collectors, such that the two current collectors are arranged opposite each other along a width direction of the current collecting component, and the insulator is located at least partially between the two current collectors in the width direction to insulate the two current collectors from each other; where a limiting structure is formed between the insulator and the current collectors to restrict the current collectors from leaving the insulator in the width direction.

According to a fifth aspect of the invention, embodiments of this application also provide a manufacturing device of a current collecting component according to the first aspect of the invention, including: a first providing apparatus configured to provide two current collectors; a second providing apparatus configured to provide an insulator; and an assembling apparatus configured to connect the insulator to the two current collectors, such that the two current collectors are arranged opposite each other in a width direction of the current collecting component, and the insulator is located at least partially between the two current collectors in the width direction to insulate the two current collectors from each other; where a limiting structure is formed between the insulator and the current collector to limit the current collectors from leaving the insulator in the width direction.

### BRIEF DESCRIPTION OF DRAWINGS

FIG. 1 is a structural schematic diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a structural schematic diagram of a current collecting component shown in FIG. 3;
FIG. 5 is an exploded view of the current collecting component shown in FIG. 3;
FIG. 6 is a schematic diagram of the connection between the current collecting component shown in FIG. 3 and two output poles;
FIG. 7 is a schematic diagram of the connection between the current collector and insulator shown in FIG. 4;
FIG. 8 is an exploded view of the current collector and insulator shown in FIG. 4;
FIG. 9 is a schematic diagram of the connection between a current collector and an insulator according to another embodiment of this application;
FIG. 10 is a schematic diagram of the connection between a current collector and an insulator according to still another embodiment of this application;
FIG. 11 is a schematic diagram of the connection between a current collector and an insulator according to yet another embodiment of this application;
FIG. 12 is a top view of the current collecting component shown in FIG. 4;
FIG. 13 is a structural schematic diagram of the current collector shown in FIG. 12;
FIG. 14 is a flowchart of a manufacturing method of a current collecting component according to some embodiments of this application; and
FIG. 15 is a schematic diagram of a manufacturing device of a current collecting component according to some embodiments of this application.

Reference signs: 10 - box; 11 - first portion; 12 - second portion; 20 - battery cell; 21 - housing; 22 - electrode assembly; 221 - tab; 23 - end cover; 231 - electrode terminal; 24 - current collecting component; 241 - current collector; 2411 - welding region; 2411a - abutment surface; 242 - insulator; 2421 - second through hole; 2422 - limiting slot; 2422a - slot sidewall; 243 - limiting structure; 2431 - limiting part; 2432 - recess; 100 - battery; 200 - controller; 300 - motor; 1000 - vehicle; 2000 - manufacturing device; 2100 - first providing apparatus; 2200 - second providing apparatus; 2300 - assembling apparatus; x - width direction; y - extending direction; z - thickness direction.

### DETAILED DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of PP (polypropylene, polypropylene), PE (polyethylene, polyethylene), or the like. In addition, the electrode assembly may be a wound structure or a stacked structure, but the embodiments of this application are not limited thereto.

The development of battery technology requires consideration of various design factors, such as energy density, cycle life, discharge capacity, charge and discharge rates, and other performance parameters. Additionally, the safety of the battery must also be considered.

For a general battery cell, the battery cell has two output poles with opposite polarities. The two output poles are respectively electrically connected to a positive electrode tab and a negative electrode tab of an electrode assembly to output electrical energy of the battery cell. The two output poles are located at opposite ends of the battery cell. Among the two output poles, both output poles can be electrode terminals, or one output pole can be an electrode terminal while the other output pole can be an end cover or housing of the battery cell.

In order to achieve a better electrical connection between the output pole and the tab, a current collecting component is generally provided in the battery cell. The output pole and the tab are connected together through the current collecting component. As the two output poles of the battery cell are respectively located at the two ends of the battery cell, and the two current collecting components connected to the two output poles are respectively located at the two ends of the electrode assembly, the two current collecting components occupy a relatively large space inside the housing, which affects the energy density of the battery cell.

To increase the energy density of the battery cell, the two output poles of the battery cell can be arranged on the same end, so that both current collecting components are positioned on the same side of the electrode assembly. In this way, a space for installing the current collecting components needs to be reserved on only one side of the electrode assembly, which can improve the energy density of the battery cell. However, the inventors have found that in such a battery cell, because two current collecting components are on the same side of the electrode assembly, the two current collecting components are prone to overlap due to battery cell vibration or collision, resulting in internal short circuit, poor safety, and even fire or explosion of the battery cell.

Given this, an embodiment of this application provides a current collecting component. The current collecting component is provided as an insulator and two current collectors with the insulator placed between the two current collectors, and a limiting structure is provided between the insulator and the current collectors to restrict the current collectors from leaving the insulator in the width direction of the current collecting component.

In such a current collecting component, two current collectors are connected via an insulator, and the two current collectors are insulated from each other by the insulator. The current collectors are restricted from leaving the insulator in the width direction of the current collecting component by a limiting structure, so that the two current collectors are not easily separated from the insulator, reducing the risk of the two current collectors 241 overlapping with each other and causing a short circuit inside the battery cell, thus improving the safety of the battery cell.

The current collecting component described in embodiments of this application is applicable to battery cells, batteries, and electric devices that use batteries.

Electric devices can be vehicles, mobile phones, portable devices, laptops, ships, spacecraft, electric toys, electric tools, and the like. Vehicles can be fueled by gasoline, natural gas, or new energy vehicles. New energy vehicles can be battery electric vehicles, hybrid vehicles, extended-range electric vehicles, or the like. Spacecraft includes airplanes, rockets, space shuttles, spaceships, and the like. Electric toys include fixed or mobile electric toys, such as game consoles, electric toy cars, electric toy boats, electric toy airplanes, and the like. Electric tools include electric metal cutting tools, electric grinding tools, electric assembling tools, and railway-specific electric tools, such as electric drills, electric grinders, electric wrenches, electric screwdrivers, electric hammers, electric impact drills, concrete vibrators, and electric planers. This application does not make any special limitations on the above-mentioned electric device.

For the purpose of description, the following embodiments use a vehicle as an example of the electric device to illustrate the application.

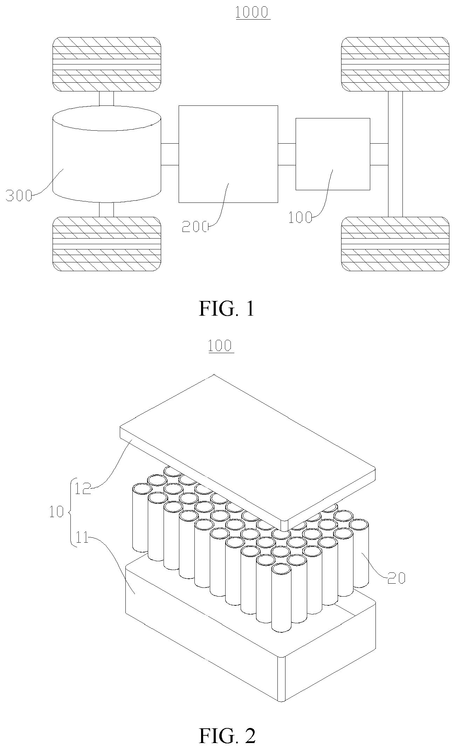

Refer to FIG. 1. FIG. 1 is a schematic diagram of the structure of a vehicle 1000 provided in some embodiments of this application. The vehicle 1000 is equipped with a battery 100 inside. The battery 100 can be located at the bottom, top, or rear of the vehicle 1000. The battery 100 can be used to power the vehicle 1000, for example, the battery 100 can serve as an operating power source for the vehicle 1000.

The vehicle 1000 can also include a controller 200 and a motor 300. The controller 200 is configured to control the battery 100 to supply power to the motor 300, for example, to meet the electrical power requirements for starting, navigating, and driving of the vehicle 1000.

In some embodiments of this application, the battery 100 can not only serve as the operating power source of the vehicle 1000, but also as a driving power source of the vehicle 1000, replacing or partially replacing fuel or natural gas to provide driving power for the vehicle 1000.

Refer to FIG. 2. FIG. 2 shows an exploded view of the battery 100 provided in some embodiments of this application. The battery 100 includes a box 10 and a battery cell 20, where the box 10 is configured to accommodate the battery cell 20.

Among them, the box 10 is a component that accommodates the battery cell 20, providing a receiving space for the battery cell 20. The box 10 can have various structures. In some embodiments, the box 10 can include a first portion 11 and a second portion 12. The first portion 11 and the second portion 12 are mutually overlapped to define the space for accommodating the battery cell 20. The first portion 11 and the second portion 12 can have various shapes, such as rectangular or cylindrical. The first portion 11 can be a hollow structure with one side open, and the second portion 12 can also be a hollow structure with one side open. When the open side of the second portion 12 is overlapped with the open side of the first portion 11, a box 10 with an accommodating space is formed. Alternatively, the first portion 11 can be a hollow structure with one side open, and the second portion 12 can be a plate structure. When the second portion 12 overlaps the open side of the first portion 11, a box 10 with an accommodating space is formed. The first portion 11 and the second portion 12 can be sealed with a sealing element, such as sealing ring or sealing glue.

In the battery 100, there may be one or multiple battery cells 20. If multiple battery cells 20 are used, they can be connected in series, parallel or series-parallel. "Series-parallel" refers to multiple battery cells 20 in which some are connected in series and some are connected in parallel. Multiple battery cells 20 can be first connected in series, parallel, or series-parallel to form a battery module, and multiple battery modules can then be connected in series, parallel, or series-parallel to form a whole and be accommodated in the box 10. Alternatively, all the battery cells 20 can be directly connected in series, parallel, or series-parallel, and the whole composed of all the battery cells 20 can be accommodated in the box 10.

In some embodiments, the battery 100 may also include a busbar component, which allows for electrical connections between multiple battery cells 20, enabling series, parallel or mixed connections of multiple battery cells 20. The busbar component may be a metallic conductor, such as copper, iron, aluminum, stainless steel, aluminum alloy, and the like.

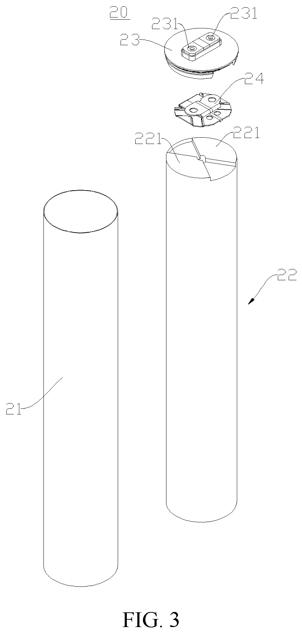

Refer to FIG. 3. FIG. 3 is an exploded view of the battery cell 20 provided in some embodiments of this application. The battery cell 20 includes a housing 21, an electrode assembly 22, an end cover 23, and a current collecting component 24.

The housing 21 is a component configured to accommodate the electrode assembly 22. The housing 21 can be a hollow structure with an open end. The housing 21 can have various shapes, such as a cylinder or a rectangular prism. The material of the housing 21 can be varied, such as copper, iron, aluminum, steel, aluminum alloy, and the like.

The electrode assembly 22 is a component of the battery cell 20 where electrochemical reactions occur. Electrode assembly 22 has two tabs 221 with opposite polarities, where one tab 221 is a positive electrode tab and the other tab 221 is a negative electrode tab, and both tabs 221 can be formed on the same end of the electrode assembly 22.

The end cover 23 is a part that covers the opening of the housing 21 to isolate the internal environment of the battery cell 20 from the external environment. The end cover 23 covers the opening of the housing 21, and together with the housing 21, it defines a sealed space for accommodating the electrode assembly 22, electrolyte, and other components. The end cover 23 and the housing 21 can be sealed with a sealing member. The shape of the end cover 23 can be adapted to the shape of the housing 21. For example, the housing 21 is a rectangular solid structure, and the end cover 23 is a rectangular plate-shaped structure that fits the housing 21. For another example, the housing 21 is a cylindrical structure, and the end cover 23 is a circular plate-shaped structure that fits the housing 21. The material of the end cover 23 can also be varied too, such as copper, iron, aluminum, steel, aluminum alloy, and the like.

An electrode terminal 231 can be provided on the end cover 23 for electrically connecting with the electrode assembly 22 to output the electrical energy of the battery cell 20. There may be one or two electrode terminals 231 on the end cover 23. If there is only one electrode terminal 231 on the end cover 23, the end cover 23 and the electrode terminal 231 are respectively electrically connected to the two tabs 221 of the electrode assembly 22 to make the end cover 23 and the electrode terminal 231 respectively act as two output poles of the battery cell 20 with opposite polarities. As shown in FIG. 3, if there are two electrode terminals 231 on the end cover 23, the two electrode terminals 231 can respectively be the positive electrode terminal and the negative electrode terminal, and the positive electrode terminal and the negative electrode terminal are respectively electrically connected to the two tabs 221 of the electrode assembly 22 to make the positive electrode terminal and the negative electrode terminal respectively act as two output poles of the battery cell 20 with opposite polarities.

In the battery 100, multiple battery cells 20 are electrically connected through the busbar component to achieve a series, parallel, or series-parallel connection of multiple battery cells 20. The output poles of the battery cells 20 are configured to connect to the busbar component. For example, in the case of two battery cells 20 connected in series and with the positive and negative electrode terminals on the end cover 23 serving as the two output poles of the battery cells 20, the positive electrode terminal of one battery cell 20 is connected to the negative electrode terminal of the other battery cell 20 through the busbar component.

The current collecting component 24 is a component that connects the two output poles of the electrode assembly 22 and the battery cell 20. In an embodiment where the end cover 23 and the electrode terminal 231 are the two output poles of the battery cell 20, one tab 221 of the electrode assembly 22 is connected to the end cover 23 and the other tab 221 of the electrode assembly 22 is connected to the electrode terminal 231 via the same current collecting component 24. In an embodiment where the positive electrode terminal and the negative electrode terminal are the two output poles of the battery cell 20, one tab 221 of the electrode assembly 22 is connected to the positive electrode terminal and the other tab 221 is connected to the negative electrode terminal via the current collecting component 24.

The specific structure of the current collecting component 24 is described in detail below, with reference to the accompanying drawings.

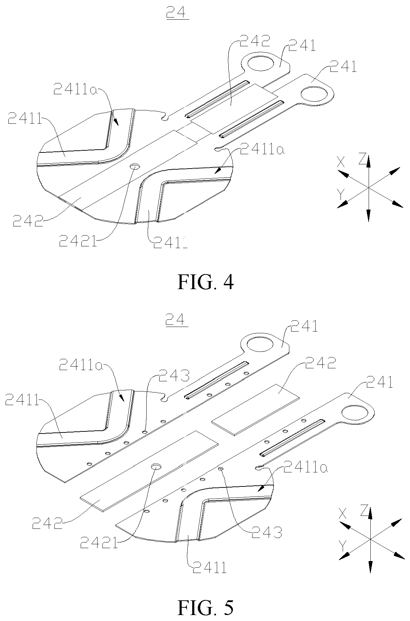

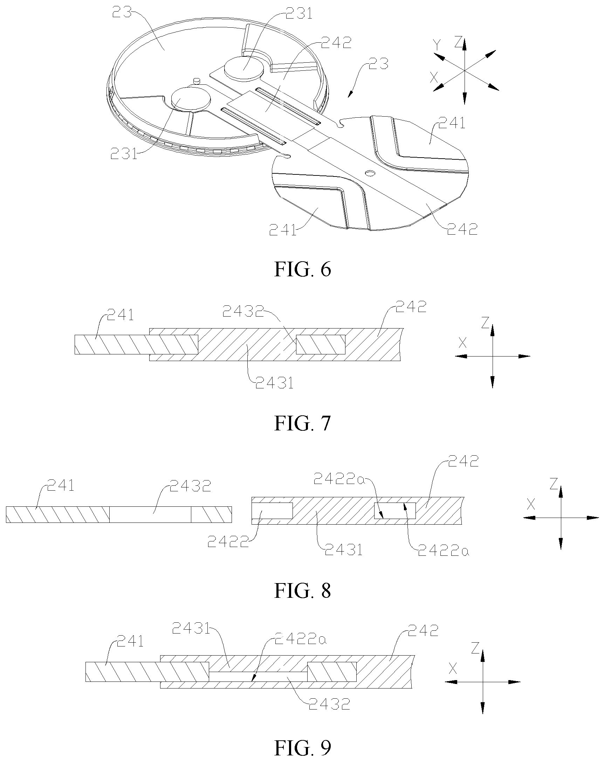

Refer to FIGs. 4 to 6. FIG. 4 is a structural schematic diagram of the current collecting component 24 shown in FIG. 3, FIG. 5 is an exploded view of the current collecting component 24 shown in FIG. 3, and FIG. 6 is a schematic diagram of connection between the current collecting component 24 shown in FIG. 3 and two output poles. An embodiment of this application provides a current collecting component 24 for a battery cell 20 having two output poles with opposite polarities for outputting electrical energy. The current collecting component 24 includes an insulator 242, a limiting structure 243, and two current collectors 241. The two current collectors 241 are arranged opposite to each other along a width direction X of the current collecting component 24 to connect to the two output poles, respectively. The insulator 242 is configured to connect the two current collectors 241 and is located at least partially between the two current collectors 241 in the width direction X to insulate the two current collectors 241 from each other. The limiting structure 243 is configured to restrict the current collectors 241 from leaving the insulator 242 in the width direction X.

The current collector 241 is a conductive portion of the current collecting component 24. The current collector 241 can be a sheet-like metallic conductor, such as copper, iron, aluminum, stainless steel, aluminum alloy, and the like.

For the two current collectors 241 to be respectively connected to the two output poles, the current collectors 241 can be welded to the output poles. Alternatively, the two current collectors 241 can also be respectively connected to the two tabs 221 of the electrode assembly 22, and the current collectors 241 can be welded to the tabs 221. In an embodiment where the end cover 23 and the electrode terminal 231 serve as the two output poles of the battery cell 20, one current collector 241 in the current collecting component 24 is connected to the end cover 23 and one tab 221 of the electrode assembly 22, and the other current collector 241 in the current collecting component 24 is connected to the electrode terminal 231 and the other tab 221 of the electrode assembly 22. As shown in FIG. 6, in an embodiment where the two electrode terminals 231 serve as the two output poles of the battery cell 20, one current collector 241 in the current collecting component 24 is connected to one tab 221 of the electrode assembly 22 and one electrode terminal 231, and the other current collector 241 in the current collecting component 24 is connected to the other electrode terminal 231 and the other tab 221 of the electrode assembly 22.

For example, referring to FIGs. 4 and 5, the current collector 241 has a welding region 2411 for welding to the tab 221, the welding region 2411 has an abutment surface 2411a for abutting against the tab 221, and the insulator 242 does not exceed the abutment surface 2411a. This is to avoid interference between the insulator 242 and the tab 221 during welding of the current collector 241 to the tab 221, preventing the situation where the abutment surface 2411a cannot abut against the tab 221.

A protrusion is formed on the current collector 241 in welding region 2411, and the surface of the protrusion forms the abutment surface 2411a. The protrusion can be a V-shaped structure.

The insulator 242 is an insulating portion within the current collecting component 24. The insulator 242 provides insulation between the two current collectors 241, creating a distance between the two current collectors 241 in the width direction X of the current collecting component 24 to insulate the two current collectors 241 from each other. The insulator 242 is made of insulating material, such as plastic, rubber, and the like.

By way of example, the insulator 242 is provided with a second through hole 2421, and the second through hole 2421 is arranged opposite a center hole of the electrode assembly 22.

The limiting structure 243 restricts the current collector 241 from leaving the insulator 242 in the width direction X, and can be of various structural forms as long as it can limit the current collector 241 from leaving the insulator 242 in the width direction X. The limiting structure 243 between the current collector 241 and the insulator 242 can be one or more.

After being installed inside the battery cell 20, the current collecting component 24 can be an expanded flat structure, for example, the current collecting component 24 is basically a flat plate. If the current collecting component 24 is a circular disk-like structure, the radial direction of the current collecting component 24 can be understood as the width direction X of the current collecting component 24. Alternatively, the current collecting component 24 can be a folded structure, for example, after being expanded, the current collecting component 24 is a long strip structure, and the current collecting component 24 can be folded into multiple layers, with the width direction X of the current collecting component 24 perpendicular to the length direction of the current collecting component 24 after it is expanded.

In the embodiment of this application, the two current collectors 241 are connected via the insulator 242, and the two current collectors 241 are insulated from each other by the insulator 242. The current collectors 241 are restricted from leaving the insulator 242 in the width direction X of the current collecting component 24 by the limiting structure 243, so that the two current collectors 241 are not easily separated from the insulator 242, reducing the risk of the two current collectors 241 overlapping with each other and causing a short circuit inside the battery cell 20, thus improving the safety of the battery cell 20.

In addition, due to the connection of the two current collectors 241 via the insulator 242, and the restriction of the limiting structure 243, the two current collectors 241 are not easily separated from the insulator 242, making the entire current collecting component 24 have good integrity, facilitating installation, and ensuring that the current collectors 241 and the insulator 242 are not easily separated during installation, thereby improving the assembly efficiency of the battery cell 20.

In some embodiments, referring to FIGs. 7 and 8, FIG. 7 is a schematic diagram of the connection between the current collector 241 and the insulator 242 shown in FIG. 4, and FIG. 8 is an exploded view of the current collector 241 and the insulator 242 shown in FIG. 4. The limiting structure 243 includes a limiting part 2431 and a recess 2432, where one of the limiting part 2431 and the recess 2432 is provided on the current collector 241 and the other is provided on the insulator 242. The limiting part 2431 is configured to engage with the recess 2432 to restrict the current collector 241 from leaving the insulator 242 in the width direction X.

Using the limiting part 2431 provided on the insulator 242 and the recess 2432 on the current collector 241 as an example, the recess 2432 can be a hole in the current collector 241, either a blind hole in the current collector 241 or a first through hole running through the surface of the current collector 241 in the thickness direction Z. The recess 2432 can be a circular or square hole, and it is understood that if the recess 2432 is a circular hole, the limiting part 2431 is a cylindrical structure that matches the recess 2432, and if the recess 2432 is a square hole, the limiting part 2431 is a four-sided prism structure that matches the recess 2432.

In this embodiment, the current collector 241 is effectively prevented from leaving the insulator 242 in the width direction X of the current collecting component 24 by the interlocking between the limiting part 2431 and the recess 2432, with the structure being simple and easy to manufacture, thus improving the firmness of the connection between the current collector 241 and the insulator 242 after they are connected.

In some embodiments, referring to FIGs. 7 and 8, the insulator 242 has a limiting slot 2422. One end of the current collector 241 is snap fitted into the limiting slot 2422 along the width direction X to restrict the current collector 241 from moving relative to the insulator 242 in a thickness direction Z of the current collecting component 24.

Understandably, the limiting slot 2422 is provided at both ends of the insulator along the width direction X, with a current collector 241 corresponding to one limiting slot 2422 being secured within the limiting slot 2422. The opening of the limiting slot 2422 is located on an end face of the current collector 241 along the width direction X.

In this embodiment, one end of the current collecting component 24 is snap fitted to the limiting slot 2422 of the insulator 242. The limiting slot 2422 limits the current collecting component 24 to restrict the current collector 241 from moving relative to the insulator 242 in the thickness direction Z of the current collecting component 24, so that the current collector 241 is prevented from leaving the insulator 242 in both the width direction X and thickness direction Z of the current collecting component 24. In addition, as the end of the current collecting component 24 is secured within the limiting slot 2422 of the insulator 242, the thickness of the part of the current collecting component 24 located inside the limiting slot 2422 is smaller than the thickness of the insulator 242, leading to better insulation effectiveness of the insulator 242 between the two current collectors 241.

In some embodiments, the limiting structure 243 includes a recess 2432 and a limiting part 2431. The recess 2432 is provided on the current collector 241. The limiting part 2431 is provided on the insulator 242. The limiting part 2431 is located at least partially within the limiting slot 2422 and engages with the recess 2432 to restrict the current collector 241 from leaving the insulator 242 in the width direction X.

The limiting part 2431 and the insulator 242 can be an integrally formed structure. The recess 2432 can be a hole provided into the current collector 241, either a blind hole provided into the current collector 241 or a through hole running through the surface of the current collector 241 in the thickness direction Z.

By inserting the limiting part 2431 on the insulator 242 into the recess 2432 of the current collector 241 and having one end of the current collecting component 24 secured to the limiting slot 2422 of the insulator 242, the current collector 241 is prevented from separating easily from the insulator 242 in both the width direction X and thickness direction Z of the current collecting component 24.

In some embodiments, referring to FIG. 7 and FIG. 8, the recess 2432 is a first through hole running through the surface of the current collector 241 in the thickness direction Z.

The recess 2432 is a through hole structure, which passes through opposite surfaces of the current collector 241 in the thickness direction Z.

By way of example, the first through hole in current collector 241 is a circular hole.

In this embodiment, the recess 2432 is a through hole structure, easy to process. The recess 2432 can provide more accommodating space for the limiting part 2431, making it difficult for the limiting part 2431 to detach from the recess 2432 due to elastic deformation caused by the current collector 241, enhancing the position limiting ability of the limiting structure 243 on the current collector 241 and further improving the firmness of the connection between the current collector 241 and the insulator 242.

In some embodiments, the limiting slot 2422 includes two slot sidewalls 2422a which are arranged opposite each other along the thickness direction Z. Two ends of the limiting part 2431 are fixed to the two slot sidewalls 2422a, respectively.

The slot sidewall 2422a is a wall of the limiting slot 2422 arranged in the thickness direction Z of the current collecting component 24. The slot sidewall 2422a can be a flat surface.

In this embodiment, the two ends of the limiting part 2431 are respectively fixed on the two slot sidewalls 2422a of the limiting slot 2422, which enhances the connection strength between the limiting part 2431 and the insulator 242, and reduces the risk of the current collector 241 detaching from the limiting slot 2422 due to breakage of the limiting part 2431 from the insulator 242.

In other embodiments, referring to FIG. 9, FIG. 9 is a schematic diagram of the connection between the current collector 241 and the insulator 242 in another embodiment of this application. One end of the limiting part 2431 is fixed to one slot sidewall 2422a of the limiting slot 2422, and a gap is provided between the other end of the limiting part 2431 and the other slot sidewall 2422a of the limiting slot 2422. The limiting part 2431 has elastic deformation capability. During the process of the current collector 241 being inserted into the limiting slot 2422, the limiting part 2431 undergoes elastic deformation. When the limiting part 2431 aligns with the recess 2432, the limiting part 2431 recovers from the deformation and is inserted into the recess 2432.

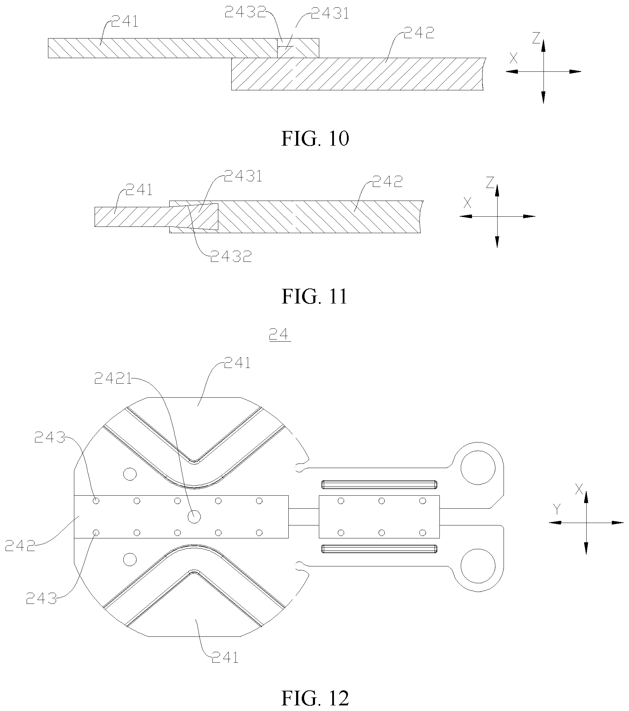

In other embodiments, the current collector 241 and the insulator 242 may also have other arrangement forms. For example, referring to FIG. 10, FIG. 10 is a schematic diagram of the connection between the current collector 241 and the insulator 242 in another embodiment of this application. The current collector 241 and the insulator 242 can be stacked, and the limiting part 2431 is a protrusion protruding from the surface of the insulator, the protrusion being matched with the recess 2432.

In some embodiments, referring to FIGs. 7 to 10, the recess 2432 is depressed along the thickness direction Z of the current collecting component 24. That is, the depth direction of the recess 2432 is consistent with the thickness direction Z of the current collecting component 24.

Taking a first through hole provided in the current collecting component 24 as an example of the recess 2432, the axial direction of the first through hole is the thickness direction Z of the current collecting component 24.

The recess 2432 is depressed along the thickness direction Z of the current collecting component 24, so that the limiting part 2431 also extends along the thickness direction Z of the current collecting component 24. The limiting part 2431 is matched with the recess 2432 to restrict the current collector 241 from leaving the insulator 242 in the width direction X of the current collecting component 24. The structure is simple and reduces the difficulty of forming the recess 2432 and the limiting part 2431.

In other embodiments, referring to FIG. 11, FIG. 11 is a schematic diagram of the connection between the current collector 241 and the insulator 242 in another embodiment of this application. The recess 2432 can also extend along the width direction X of the current collecting component 24.

For example, the recess 2432 is a tapered groove provided on one end of the insulator 242 in the width direction X of the current collecting component 24, and the limiting part 2431 is a tapered body provided on one end of the current collector 241 in the width direction X of the current collecting component 24. The tapered body is matched with the tapered groove to restrict the current collector 241 from leaving the insulator 242 in the width direction X of the current collecting component 24.

In some embodiments, referring to FIG. 12, FIG. 12 is a plan view of the current collecting component 24 shown in FIG. 4. Multiple limiting structures 243 are arranged along the extending direction Y of the current collecting component 24 between the current collector 241 and the insulator 242.

After the current collecting component 24 is expanded, the length direction of the current collecting component 24 is the extending direction Y of the current collecting component 24.

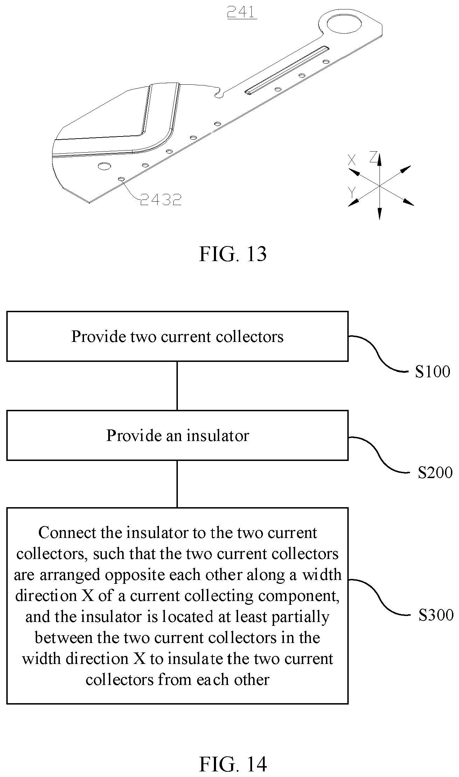

Refer to FIG. 13. FIG. 13 is a schematic diagram of the structure of the current collector 241 shown in FIG. 12. Taking a first through hole provided in the current collector 241 as an example of the recess 2432 on the limiting structure 243, since there are multiple limiting structures 243, there are multiple first through holes in the current collector 241, which are spaced apart along the extending direction Y of the current collecting component 24.

In this embodiment, by providing multiple limiting structures 243 between the current collector 241 and the insulator 242, the firmness of the connection between the current collector 241 and the insulator 242 can be further improved, making it less likely for the current collector 241 to detach from the insulator 242.

Still refer to FIG. 12. In some embodiments, the current collecting component 24 includes multiple insulators 242, which are spaced apart along the extending direction Y of the current collecting component 24. The current collector 241 is configured to be able to bend in a gap region between two adjacent insulators 242.

The multiple insulators 242 are spaced apart along the extending direction Y of the current collecting component 24, that is, there is a gap between every two adjacent insulators 242 in the extending direction Y of the current collecting component 24.

In some embodiments where the insulator 242 is provided with a second through hole 2421, it can be one insulator 242 being provided with the second through hole 2421, for example, the insulator 242 closest to the electrode assembly 22 after the current collecting component 24 is bent; or multiple insulators 242 are provided with the second through hole 2421, and the second through holes 2421 of every two adjacent insulators 242 are opposite each other after the current collecting component 24 is bent.

In this embodiment, multiple insulators 242 are spaced apart along the extending direction Y of the current collecting component 24, so that the current collector 241 can be more easily bent in the gap region between adjacent insulators 242, making it easier to fold the current collecting component 24 into a folded structure, thereby reducing the space occupied by the current collecting component 24 inside the battery cell 20.

In other embodiments, there may be one insulator 242 in the current collecting component 24 instead, and the insulator 242 is continuously arranged between the two current collectors 241 along the extending direction Y of the current collecting component 24.

In some embodiments, the insulator 242 can be an injection-molded piece molded between the two current collectors 241.

In embodiments where the limiting structure 243 includes a limiting part 2431 and a recess 2432, taking the recess 2432 provided on the current collector 241 as an example, after the insulator 242 is injection-molded, the limiting part 2431 that fits into the recess 2432 is naturally formed on the insulator 242.

The insulator 242 is an injection-molded piece which is easy to form, and the molded insulator 242 is bonded to the current collector 241, which can improve the firmness of the connection between the current collector 241 and the insulator 242.

Embodiments of this application provide a battery cell 20 including an electrode assembly 22, two output poles, and the current collecting component 24 provided in any of the above embodiments. The electrode assembly 22 has two tabs 221 with opposite polarities. The two output poles have opposite polarities and are configured to output the electrical energy of the battery cell 20. One current collector 241 is configured to connect to one tab 221 and one output pole and the other current collector 241 is configured to connect to the other tab 221 and the other output pole.

In some embodiments, the two tabs 221 are formed at one same end of the electrode assembly 22.

Taking the two output poles being two electrode terminals 231 provided on the end cover 23 as an example, the two tabs 221 are formed at an end of the electrode assembly 22 facing the end cover 23.

The two tabs 221 located at the same end of the electrode assembly 22 can be respectively connected to the two current collectors 241 of the current collecting component 24, achieving same-side tabs 221 and reducing the space occupied by the tabs 221, which is advantageous for improving the energy density of the battery cell 20.

In some embodiments, the current collector 241 has a welding region 2411 for welding to the tab 221. The welding region 2411 has an abutment surface 2411a for abutting against the tab 221, and the insulator 242 does not exceed the abutment surface 2411a.

For example, the current collector 241 has a protrusion formed at the welding region 2411, and the surface of the protrusion forms the abutment surface 2411a. The protrusion can be a V-shaped structure to increase the welding area between the current collector 241 and the tab 221.

Since the insulator 242 does not exceed the abutment surface 2411a of the current collector 241 and the tab 221, interference between the insulator 242 and the tab 221 during welding of the current collector 241 to the tab 221 can be avoided, preventing the situation where the abutment surface 2411a cannot abut against the tab 221.

In some embodiments, the electrode assembly 22 has a center hole and the insulator 242 has a second through hole 2421, the second through hole 2421 being opposite the center hole.

Taking the electrode assembly 22 being a wound structure as an example, the center hole is formed at the center of winding of the electrode assembly 22.

In this embodiment, the second through hole 2421 in the insulator 242 is located opposite the center hole of the electrode assembly 22, which enables accurate installation of the current collecting component 24. During installation, the current collector 241 can be connected to the tab 221, for example, by welding, after aligning of the second through hole 2421 with the center hole. In addition, in the event of thermal runaway of the battery cell 20, the second through hole 2421 in the insulator 242 can also serve as a pressure relief channel, making it easier for the battery cell 20 to discharge substances outward without obstruction by the current collecting component 24.

Embodiments of this application provide a battery 100 including a box 10 and the battery cell 20 as provided in any one of the previous embodiments, where the box 10 is configured to accommodate the battery cell 20.

Embodiments of this application provide an electric device including the battery 100 as provided in any one of the previous embodiments.

Refer to FIGs. 3 and 4. Embodiments of this application provide a cylindrical battery including a housing 21, an electrode assembly 22, an end cover 23, a positive electrode terminal, a negative electrode terminal, and the current collecting component 24 as provided in any one of the previous embodiments. The electrode assembly 22 is contained within the housing 21, and a positive electrode tab and a negative electrode tab are formed at one end of the electrode assembly 22. The end cover 23 covers an opening at one end of the housing 21. The positive and negative electrode terminals are located on the end cover 23 and respectively form two output poles with opposite polarities for the cylindrical battery. The current collecting component 24 is located inside the housing 21 and on the side of the electrode assembly 22 facing the end cover 23. The positive electrode tab and the positive electrode terminal, as well as the negative electrode tab and the negative electrode terminal, are connected by the same current collecting component 24.

The current collecting component 24 includes an insulator 242, a limiting structure 243, and two current collectors 241 arranged opposite each other along a width direction X of the current collecting component 24. One current collector 241 is configured to connect to the positive electrode tab and the positive electrode terminal, and the other current collector 241 is configured to connect to the negative electrode tab and the negative electrode terminal. The insulator 242 is configured to connect the two current collectors 241 and is located at least partially between the two current collectors 241 in the width direction X to insulate the two current collectors 241 from each other. The limiting structure 243 is configured to restrict the current collectors 241 from leaving the insulator 242 in the width direction X.

In such a cylindrical battery, same-side tabs 221 are achieved through the current collecting component 24, and space for installing the current collecting component 24 only needs to be reserved on one side of the electrode assembly 22 inside the housing 21. The housing 21 can provide more space for the electrode assembly 22, which is beneficial for increasing the energy density of the battery cell 20. In the current collecting component 24, the two current collectors 241 are connected via the insulator 242 and insulated from each other by the insulator 242, and the limiting structure 243 restricts the current collecting component 24 from leaving the insulator 242 in the width direction X of the current collecting component 24, so that the two current collectors 241 are not easily separated from the insulator 242. This reduces the risk of the two current collectors 241 overlapping with each other and causing a short circuit inside the battery cell 20, thus improving the safety of the battery cell 20.

Refer to FIG. 14. FIG. 14 is a flowchart of a manufacturing method of a current collecting component 24 according to some embodiments of this application. This application provides a manufacturing method of a current collecting component 24, including the following steps:
S100: Provide two current collectors 241.
S200: Provide an insulator 242.
S300: Connect the insulator 242 to the two current collectors 241, such that the two current collectors 241 are arranged opposite each other along a width direction X of the current collecting component 24, and the insulator 242 is located at least partially between the two current collectors 241 in the width direction X to insulate the two current collectors 241 from each other.

In this method, a limiting structure 243 is formed between the insulator 242 and the current collector 241, and the limiting structure 243 is configured to restrict the current collector 241 from leaving the insulator 242 in the width direction X.

In the above method, steps S100 and S200 are not limited. Step S200 may be performed before step S100, or step S100 may be performed before step S200.

In some embodiments, step S300 includes: injection molding the insulator 242 between the two current collectors 241, and forming a limiting structure 243 on the insulator 242 during the molding process.

Taking the current collector 241 being provided with a recess 2432 as an example, after the insulator 242 is injection molded between the two current collectors 241, a limiting part 2431 accommodating the recess 2432 is naturally formed on the insulator 242, thereby forming the limiting structure 243 where the limiting part 2431 is matched with the recess 2432.

It should be noted that the relevant structures of the current collecting component 24 manufactured by the manufacturing method provided in the above embodiments can be seen in the current collecting component 24 provided in the above embodiments, and will not be described again here.

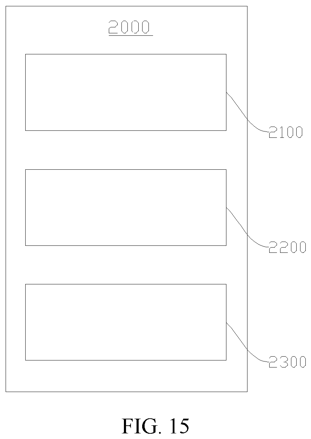

In addition, refer to FIG. 15. FIG. 15 is a schematic diagram of a manufacturing device 2000 of a current collecting component 24 according to some embodiments of this application. This application also provides a manufacturing device 2000 of a current collecting component 24. The manufacturing device 2000 includes a first providing apparatus 2100, a second providing apparatus 2200, and an assembling apparatus 2300.

The first providing apparatus is configured to provide two current collectors 241. The second providing apparatus is configured to provide the insulator 242. The assembling apparatus 2300 is configured to connect the insulator 242 to the two current collectors 241, such that the two current collectors 241 are arranged opposite to each other along a width direction X of the current collecting component 24, and the insulator 242 is located at least partially between the two current collectors 241 in the width direction X to insulate the two current collectors 241 from each other.

A limiting structure 243 is formed between the insulator 242 and the current collector 241, and the limiting structure 243 is configured to restrict the current collector 241 from leaving the insulator 242 in the width direction X.

It should be noted that relevant structures of the current collecting component 24 manufactured by the manufacturing device 2000 provided in this embodiment can be seen in the current collecting component 24 provided in the above embodiments, and will not be described again here.

It should be noted that, without conflict, the embodiments and features in the embodiments of this application may be combined with each other.

## Claims

1. A current collecting component (24) for a battery cell (20), wherein the battery cell (20) has two output poles with opposite polarities for outputting electrical energy, the current collecting component (24) comprising:
two current collectors (241) arranged opposite each other along a width direction of the current collecting component (24), wherein the two current collectors (241) are configured to connect to the two output poles respectively;
an insulator (242) configured to connect the two current collectors (241), wherein the insulator (242) is located at least partially between the two current collectors (241) in the width direction to insulate the two current collectors (241) from each other; and
a limiting structure (243) configured to restrict the current collectors (241) from leaving the insulator (242) along the width direction,
**characterised in that** the insulator (242) is provided with a limiting slot (2422), where one end of the current collector (241) is snap fitted into the limiting slot (2422) along the width direction to restrict the current collector (241) from moving relative to the insulator (242) in a thickness direction of the current collecting component (24).

2. The current collecting component (24) according to claim 1, wherein the limiting structure (243) comprises a limiting part (2431) and a recess (2432), one of the limiting part (2431) and the recess (2432) being provided on the current collector (241) and the other on the insulator (242); and
the limiting part (2431) is configured to engage with the recess (2432) to restrict the current collector (241) from leaving the insulator (242) along the width direction.

3. The current collecting component (24) according to claim 1, wherein the limiting structure (243) comprises:
a recess (2432) provided on the current collector (241); and
a limiting part (2431) provided on the insulator (242), wherein the limiting part (2431) is located at least partially within the limiting slot (2422) and engages with the recess (2432) to restrict the current collector (241) from leaving the insulator (242) along the width direction.

4. The current collecting component (24) according to claim 3, wherein the recess (2432) is a first through hole running through surface of the current collector (241) in the thickness direction.

5. The current collecting component (24) according to claim **4,** wherein the limiting slot (2422) comprises two slot sidewalls (2422a), the two slot sidewalls (2422a) being arranged opposite each other in the thickness direction with two ends of the limiting part (2431) fixed to the two slot sidewalls (2422a) respectively.

6. The current collecting component (24) according to any one of claim 2 and any one of claims 3 to 5, wherein the recess (2432) is depressed in the thickness direction of the current collecting component (24).

7. The current collecting component (24) according to any one of claims 1 to 6, wherein multiple limiting structures (243) are arranged along an extending direction of the current collecting component (24) between the current collectors (241) and the insulator (242).

8. The current collecting component (24) according to any one of claims 1 to 7, wherein the current collecting component (24) comprises multiple insulators (242), the multiple insulators being spaced along the extending direction of the current collecting component (24); and
the current collector (241) is configured to be able to bend in a gap region between adjacent two of the insulators (242).

9. The current collecting component (24) according to any one of claims 1 to 8, wherein the insulator (242) is an injection-molded piece that is molded between the two current collectors (241).

10. A battery cell (20) comprising:
an electrode assembly (22) having two tabs (221) with opposite polarities;
two output poles having opposite polarities, where the two output holes are configured to output electrical energy of the battery cell (20); and
the current collecting component (24) according to any one of claims 1 to 9, wherein one current collector (241) is configured to connect one tab (221) and one output pole and the other current collector (241) is configured to connect the other tab (221) and the other output pole, preferably wherein the two tabs (221) are formed at one same end of the electrode assembly (22).

11. The battery cell (20) according to claim 10, wherein the current collector (241) has a welding region for welding to the tab (221), the welding region has an abutment surface for abutting against the tab (221), and the insulator (242) does not exceed the abutment surface, preferably wherein the electrode assembly (22) has a center hole and the insulator (242) has a second through hole, the second through hole being opposite the center hole.

12. A battery (100) comprising:
the battery cell (20) according to claim 10 or 11; and
a box (10) configured to accommodate the battery cell (20).

13. A manufacturing method for current collecting component (24), according to anyone of claims 1 through 9, comprising:
providing (S100) two current collectors (241);
providing (S200) an insulator (242); and
connecting (S300) the insulator (242) to the two current collectors (241), such that the two current collectors (241) are arranged opposite each other along a width direction of the current collecting component (24), and the insulator (242) is located at least partially between the two current collectors (241) in the width direction to insulate the two current collectors (241) from each other;
wherein a limiting structure (243) is formed between the insulator (242) and the current collector (241) to restrict the current collector (241) from leaving the insulator (242) in the width direction.

14. A manufacturing device (2000) for current collecting component (24) according to anyone of claims 1 through 9, comprising:
a first providing apparatus (2100) configured to provide two current collectors (241);
a second providing apparatus (2200) configured to provide an insulator (242); and
an assembling apparatus (2300) configured to connect the insulator (242) to the two current collectors (241), such that the two current collectors (241) are arranged opposite each other along a width direction of the current collecting component (24), and the insulator (242) is located at least partially between the two current collectors (241) in the width direction to insulate the two current collectors (241) from each other;
wherein a limiting structure (243) is formed between the insulator (242) and the current collector (241) to restrict the current collector (241) from leaving the insulator (242) in the width direction.

## Patentansprüche

1. Eine Stromsammelkomponente (24) für eine Batteriezelle (20), wobei die Batteriezelle (20) zwei Ausgangspole mit entgegengesetzten Polaritäten zur Ausgabe elektrischer Energie aufweist, wobei die Stromsammelkomponente (24) umfasst:
zwei Stromsammler (241), die einander entlang einer Breitenrichtung der Stromsammelkomponente (24) gegenüberliegen, wobei die zwei Stromsammler (241) jeweils mit den zwei Ausgangspolen verbunden sind;
einen Isolator (242), der konfiguriert ist, die zwei Stromsammler (241) zu verbinden, wobei der Isolator (242) sich zumindest teilweise zwischen den zwei Stromsammlern (241) in der Breitenrichtung befindet, um die zwei Stromsammler (241) voneinander zu isolieren; und
eine Begrenzungsstruktur (243), die konfiguriert ist, die Stromsammler (241) daran zu hindern, den Isolator (242) entlang der Breitenrichtung zu verlassen,
**dadurch gekennzeichnet, dass** der Isolator (242) mit einem Begrenzungsschlitz (2422) versehen ist, wobei ein Ende des Stromsammlers (241) entlang der Breitenrichtung in den Begrenzungsschlitz (2422) eingerastet ist, um den Stromsammler (241) daran zu hindern, sich relativ zum Isolator (242) in einer Dickenrichtung der Stromsammelkomponente (24) zu bewegen.

2. Die Stromsammelkomponente (24) nach Anspruch 1, wobei die Begrenzungsstruktur (243) ein Begrenzungsteil (2431) und eine Vertiefung (2432) umfasst, wobei eines der Begrenzungsteil (2431) und der Vertiefung (2432) am Stromsammler (241) und das andere am Isolator (242) vorgesehen ist; und
das Begrenzungsteil (2431) konfiguriert ist, mit der Vertiefung (2432) zu greifen, um den Stromsammler (241) daran zu hindern, den Isolator (242) entlang der Breitenrichtung zu verlassen.

3. Die Stromsammelkomponente (24) nach Anspruch 1, wobei die Begrenzungsstruktur (243) umfasst:
eine Vertiefung (2432), die am Stromsammler (241) vorgesehen ist; und
ein Begrenzungsteil (2431), das am Isolator (242) vorgesehen ist, wobei das Begrenzungsteil (2431) sich zumindest teilweise innerhalb des Begrenzungsschlitzes (2422) befindet und mit der Vertiefung (2432) greift, um den Stromsammler (241) daran zu hindern, den Isolator (242) entlang der Breitenrichtung zu verlassen.

4. Die Stromsammelkomponente (24) nach Anspruch 3, wobei die Vertiefung (2432) ein erstes Durchgangsloch ist, das die Oberfläche des Stromsammlers (241) in der Dickenrichtung durchläuft.

5. Die Stromsammelkomponente (24) nach Anspruch 4, wobei der Begrenzungsschlitz (2422) zwei Schlitzseitenwände (2422a) umfasst, wobei die zwei Schlitzseitenwände (2422a) einander in der Dickenrichtung gegenüberliegen und zwei Enden des Begrenzungsteils (2431) jeweils an den zwei Schlitzseitenwänden (2422a) befestigt sind.

6. Die Stromsammelkomponente (24) nach einem der Ansprüche 2 und einem der Ansprüche 3 bis 5, wobei die Vertiefung (2432) in der Dickenrichtung der Stromsammelkomponente (24) vertieft ist.

7. Die Stromsammelkomponente (24) nach einem der Ansprüche 1 bis 6, wobei mehrere Begrenzungsstrukturen (243) entlang einer Ausdehnungsrichtung der Stromsammelkomponente (24) zwischen den Stromsammlern (241) und dem Isolator (242) angeordnet sind.

8. Die Stromsammelkomponente (24) nach einem der Ansprüche 1 bis 7, wobei die Stromsammelkomponente (24) mehrere Isolatoren (242) umfasst, wobei die mehreren Isolatoren entlang der Ausdehnungsrichtung der Stromsammelkomponente (24) beabstandet sind; und
der Stromsammler (241) konfiguriert ist, sich in einem Spaltbereich zwischen zwei benachbarten Isolatoren (242) biegen zu können.

9. Die Stromsammelkomponente (24) nach einem der Ansprüche 1 bis 8, wobei der Isolator (242) ein spritzgegossenes Teil ist, das zwischen den zwei Stromsammlern (241) geformt ist.

10. Eine Batteriezelle (20), umfassend:
eine Elektrodenanordnung (22) mit zwei Laschen (221) mit entgegengesetzten Polaritäten;
zwei Ausgangspole mit entgegengesetzten Polaritäten, wobei die zwei Ausgangspole konfiguriert sind, elektrische Energie der Batteriezelle (20) auszugeben; und
die Stromsammelkomponente (24) nach einem der Ansprüche 1 bis 9, wobei ein Stromsammler (241) konfiguriert ist, eine Lasche (221) und einen Ausgangspol zu verbinden, und der andere Stromsammler (241) konfiguriert ist, die andere Lasche (221) und den anderen Ausgangspol zu verbinden, vorzugsweise wobei die zwei Laschen (221) an einem gleichen Ende der Elektrodenanordnung (22) gebildet sind.

11. Die Batteriezelle (20) nach Anspruch 10, wobei der Stromsammler (241) einen Schweißbereich zum Verschweißen mit der Lasche (221) aufweist, wobei der Schweißbereich eine Anlagefläche zum Anliegen an der Lasche (221) aufweist, und der Isolator (242) die Anlagefläche nicht überragt, vorzugsweise wobei die Elektrodenanordnung (22) ein zentrales Loch aufweist und der Isolator (242) ein zweites Durchgangsloch aufweist, wobei das zweite Durchgangsloch dem zentralen Loch gegenüberliegt.

12. Eine Batterie (100), umfassend:
die Batteriezelle (20) nach Anspruch 10 oder 11; und
eine Box (10), die konfiguriert ist, die Batteriezelle (20) aufzunehmen.

13. Ein Herstellungsverfahren für die Stromsammelkomponente (24) nach einem der Ansprüche 1 bis 9, umfassend:
Bereitstellen (S100) von zwei Stromsammlern (241);
Bereitstellen (S200) eines Isolators (242); und
Verbinden (S300) des Isolators (242) mit den zwei Stromsammlern (241), sodass die zwei Stromsammler (241) einander entlang einer Breitenrichtung der Stromsammelkomponente (24) gegenüberliegen und der Isolator (242) sich zumindest teilweise zwischen den zwei Stromsammlern (241) in der Breitenrichtung befindet, um die zwei Stromsammler (241) voneinander zu isolieren;
wobei eine Begrenzungsstruktur (243) zwischen dem Isolator (242) und dem Stromsammler (241) gebildet wird, um den Stromsammler (241) daran zu hindern, den Isolator (242) in der Breitenrichtung zu verlassen.

14. Eine Herstellungsvorrichtung (2000) für die Stromsammelkomponente (24) nach einem der Ansprüche 1 bis 9, umfassend:
eine erste Bereitstellungsvorrichtung (2100), konfiguriert zur Bereitstellung von zwei Stromsammlern (241);
eine zweite Bereitstellungsvorrichtung (2200), konfiguriert zur Bereitstellung eines Isolators (242); und
eine Montagevorrichtung (2300), konfiguriert zur Verbindung des Isolators (242) mit den zwei Stromsammlern (241), sodass die zwei Stromsammler (241) einander entlang einer Breitenrichtung der Stromsammelkomponente (24) gegenüberliegen und der Isolator (242) sich zumindest teilweise zwischen den zwei Stromsammlern (241) in der Breitenrichtung befindet, um die zwei Stromsammler (241) voneinander zu isolieren;
wobei eine Begrenzungsstruktur (243) zwischen dem Isolator (242) und dem Stromsammler (241) gebildet wird, um den Stromsammler (241) daran zu hindern, den Isolator (242) in der Breitenrichtung zu verlassen.

## Revendications

1. Un composant de collecte de courant (24) pour une cellule de batterie (20), la cellule de batterie (20) ayant deux pôles de sortie de polarités opposées pour fournir de l'énergie électrique, le composant de collecte de courant (24) comprenant :
deux collecteurs de courant (241) disposés l'un en face de l'autre selon une direction de largeur du composant de collecte de courant (24), les deux collecteurs de courant (241) étant configurés pour se connecter respectivement aux deux pôles de sortie ;
un isolant (242) configuré pour relier les deux collecteurs de courant (241), l'isolant (242) étant situé au moins partiellement entre les deux collecteurs de courant (241) dans la direction de largeur pour les isoler l'un de l'autre ; et
une structure de limitation (243) configurée pour empêcher les collecteurs de courant (241) de quitter l'isolant (242) selon la direction de largeur,
**caractérisé en ce que** l'isolant (242) est pourvu d'une fente de limitation (2422), où une extrémité du collecteur de courant (241) est encliquetée dans la fente de limitation (2422) selon la direction de largeur pour empêcher le collecteur de courant (241) de se déplacer par rapport à l'isolant (242) dans une direction d'épaisseur du composant de collecte de courant (24).

2. Le composant de collecte de courant (24) selon la revendication 1, dans lequel la structure de limitation (243) comprend une partie de limitation (2431) et une cavité (2432), l'une de la partie de limitation (2431) et de la cavité (2432) étant prévue sur le collecteur de courant (241) et l'autre sur l'isolant (242) ; et
la partie de limitation (2431) est configurée pour s'engager avec la cavité (2432) afin d'empêcher le collecteur de courant (241) de quitter l'isolant (242) selon la direction de largeur.

3. Le composant de collecte de courant (24) selon la revendication 1, dans lequel la structure de limitation (243) comprend :
une cavité (2432) prévue sur le collecteur de courant (241) ; et
une partie de limitation (2431) prévue sur l'isolant (242), la partie de limitation (2431) étant située au moins partiellement dans la fente de limitation (2422) et s'engageant avec la cavité (2432) pour empêcher le collecteur de courant (241) de quitter l'isolant (242) selon la direction de largeur.

4. Le composant de collecte de courant (24) selon la revendication 3, dans lequel la cavité (2432) est un premier trou traversant la surface du collecteur de courant (241) dans la direction d'épaisseur.

5. Le composant de collecte de courant (24) selon la revendication 4, dans lequel la fente de limitation (2422) comprend deux parois latérales de fente (2422a), les deux parois latérales de fente (2422a) étant disposées en face l'une de l'autre dans la direction d'épaisseur, avec deux extrémités de la partie de limitation (2431) fixées respectivement aux deux parois latérales de fente (2422a).

6. Le composant de collecte de courant (24) selon l'une des revendications 2 et l'une des revendications 3 à 5, dans lequel la cavité (2432) est enfoncée dans la direction d'épaisseur du composant de collecte de courant (24).

7. Le composant de collecte de courant (24) selon l'une des revendications 1 à 6, dans lequel plusieurs structures de limitation (243) sont disposées le long d'une direction d'extension du composant de collecte de courant (24) entre les collecteurs de courant (241) et l'isolant (242).

8. Le composant de collecte de courant (24) selon l'une des revendications 1 à 7, dans lequel le composant de collecte de courant (24) comprend plusieurs isolants (242), les isolants multiples étant espacés le long de la direction d'extension du composant de collecte de courant (24) ; et
le collecteur de courant (241) est configuré pour pouvoir se plier dans une zone d'intervalle entre deux isolants (242) adjacents.

9. Le composant de collecte de courant (24) selon l'une des revendications 1 à 8, dans lequel l'isolant (242) est une pièce moulée par injection formée entre les deux collecteurs de courant (241).

10. Une cellule de batterie (20) comprenant :
un ensemble d'électrodes (22) ayant deux languettes (221) de polarités opposées ;
deux pôles de sortie de polarités opposées, les deux pôles de sortie étant configurés pour fournir l'énergie électrique de la cellule de batterie (20) ; et
le composant de collecte de courant (24) selon l'une des revendications 1 à 9, dans lequel un collecteur de courant (241) est configuré pour connecter une languette (221) et un pôle de sortie, et l'autre collecteur de courant (241) est configuré pour connecter l'autre languette (221) et l'autre pôle de sortie, de préférence dans lequel les deux languettes (221) sont formées à une même extrémité de l'ensemble d'électrodes (22).

11. La cellule de batterie (20) selon la revendication 10, dans laquelle le collecteur de courant (241) a une zone de soudure pour être soudé à la languette (221), la zone de soudure ayant une surface d'appui contre la languette (221), et l'isolant (242) ne dépasse pas la surface d'appui, de préférence dans lequel l'ensemble d'électrodes (22) a un trou central et l'isolant (242) a un second trou traversant, le second trou traversant étant en face du trou central.

12. Une batterie (100) comprenant :
la cellule de batterie (20) selon la revendication 10 ou 11 ; et
un boîtier (10) configuré pour accueillir la cellule de batterie (20).

13. Un procédé de fabrication du composant de collecte de courant (24) selon l'une des revendications 1 à 9, comprenant :
fournir (S100) deux collecteurs de courant (241) ;
fournir (S200) un isolant (242) ; et
connecter (S300) l'isolant (242) aux deux collecteurs de courant (241), de sorte que les deux collecteurs de courant (241) soient disposés en face l'un de l'autre selon une direction de largeur du composant de collecte de courant (24), et que l'isolant (242) soit situé au moins partiellement entre les deux collecteurs de courant (241) dans la direction de largeur pour les isoler l'un de l'autre ;
dans lequel une structure de limitation (243) est formée entre l'isolant (242) et le collecteur de courant (241) pour empêcher le collecteur de courant (241) de quitter l'isolant (242) dans la direction de largeur.

14. Un dispositif de fabrication (2000) pour le composant de collecte de courant (24) selon l'une des revendications 1 à 9, comprenant :
un premier appareil de fourniture (2100) configuré pour fournir deux collecteurs de courant (241) ;
un second appareil de fourniture (2200) configuré pour fournir un isolant (242) ; et
un appareil d'assemblage (2300) configuré pour connecter l'isolant (242) aux deux collecteurs de courant (241), de sorte que les deux collecteurs de courant (241) soient disposés en face l'un de l'autre selon une direction de largeur du composant de collecte de courant (24), et que l'isolant (242) soit situé au moins partiellement entre les deux collecteurs de courant (241) dans la direction de largeur pour les isoler l'un de l'autre ;
dans lequel une structure de limitation (243) est formée entre l'isolant (242) et le collecteur de courant (241) pour empêcher le collecteur de courant (241) de quitter l'isolant (242) dans la direction de largeur.
